# EUROPEAN PATENT APPLICATION

(11) **EP 4 164 066 A1**
(43) Date of publication of application: **12.04.2023**
(21) Application number: 21201430.2
(22) Date of filing: 07.10.2021
(51) Int. Cl.: H01R 13/436, H01R 13/66

(54) **HIGH TEMPERATURE SENSOR HOUSING WITH THERMOCOUPLE CONNECTION**

(71) Applicant: Vitesco Technologies GmbH, 93055 Regensburg (DE)
(72) Inventor: Branny, Marian, 81737 Munich (DE); Miksanek, Otakar, 81737 Munich (DE); Filipec, Ales, 81737 Munich (DE); Buzek, Tomas, 81737 Munich (DE); Hanzalik, Marian, 81737 Munich (DE)
(74) Representative: Vitesco Technologies

(57) **Abstract**

The present invention relates to a connector assembly for a temperature sensor assembly which has at least one secure connection which prevents disassembly. The connector assembly has one or more wire assemblies (34a,34b), which are inserted into a housing (12) and connected to corresponding pins (24), where the pins (24) are mounted on a printed circuit board (PCB) (18). A locking element (50) is then inserted into the housing (12) to secure the wire assemblies (34a,34b) in place. In an embodiment, a single locking element (50) is used to connect the wire assemblies (34a,34b) in the housing (12). In an embodiment, the locking element (50) is connected to the housing (12) by a snap-fit, or interference fit connection, but other types of connections may be used. A cover (14) is then attached to the housing (12) to complete the connector assembly. Once the locking element (50) is attached to the housing (12), the wire assemblies (34a,34b) and the locking element (50) may not be removed without causing catastrophic damage to the components of the connector assembly.

## Description

The invention relates generally to a connector assembly for a housing which is part of a high temperature sensor assembly.

Temperature sensors are commonly used for many different applications. Typically, temperature sensors include one or more lead wires which are connected to a sensing probe. The lead wire is also attached to a connector, and the connector is in electrical communication with an ECU of a vehicle.

Current temperature sensor designs have various undesirable costs because they include both a connector and a cable clip used to attach a wire assembly to a housing, which also increases the number of assembly operations. Current temperature sensor designs also have issues with leakage between the connector and the housing. Furthermore, some current temperature sensor designs also require two covers which must be tightly welded to the housing to prevent leakage, and these covers sometimes shift out of position during production, which may have an effect on weld quality. Also, the pins, which are connected to the lead wire, must be secured correctly in the housing during assembly.

The connection used for current temperature sensors includes inserting a receptable pin of a lead wire into an aperture of a housing for connection with the pins. However, this type of connection is not robust enough to withstand a very small pulling force. As a result, current temperature sensor designs have failure issues as a result of the lead wire becoming detached from the connector. Also, the size of the connector used in current designs does not allow for the reduction in the dimensions of the housing. Accordingly, there exists a need for a temperature sensor having a connector which is more securely connected to a lead wire.

An example of a temperature sensor is known in FR 3 053 465, titled "Protective Casing For A Temperature Sensor In A Vehicle."

Another example of a temperature sensor is WO 2020/193597, titled "Protective Casing For A Vehicle Temperature Sensor."

Therefore, it is an object of the present invention to provide a high temperature sensor housing with a thermocouple connection, and method for manufacturing the same, and more specifically to a connector assembly for a housing which is part of a temperature sensor assembly.

This object may be achieved by the connector assembly according to independent claims 1 and 8, and the method according to independent claim 9. Preferred embodiments are given in the dependent claims.

In an embodiment, the present invention is a connector assembly for a temperature sensor assembly which has at least one secure connection which prevents disassembly. The connector assembly has one or more wire assemblies, which are inserted into a housing and connected to corresponding pins, where the pins are mounted on a printed circuit board (PCB). A locking element is then inserted into the housing to secure the wire assemblies in place. In an embodiment, a single locking element is used to connect the wire assemblies in the housing. In an embodiment, the locking element is connected to the housing by a snap-fit, or interference fit, but other types of connections may be used. A cover is then attached to the housing to complete the connector assembly. Once the locking element is attached to the housing, the wire assemblies and the locking element may not be removed without causing catastrophic damage to the components of the connector assembly.

In an embodiment, the present invention is a connector assembly, which includes a housing having a cavity, at least one aperture integrally formed as part of the housing, and at least one wire assembly connected to the housing in the cavity, the at least one wire assembly also extending through the at least one aperture. In an embodiment, the connector assembly also includes a locking element connected to the housing such that the locking element is located in the cavity, and the locking element prevents the at least one wire assembly from becoming detached from the housing.

In an embodiment, the wire assembly includes at least one receptacle pin, and a recessed portion formed as part of the receptacle pin. The locking element is at least partially disposed in the recessed portion when the locking element is connected to the housing.

In an embodiment, the locking element is permanently connected to the housing.

In an embodiment, the connector assembly includes at least one locking tab integrally formed as part of the locking element, at least one outer locking tab integrally formed as part of the housing, and the locking tab is in contact with the outer locking tab when the locking element is connected to the housing, preventing the wire assembly from becoming disconnected from the housing.

In an embodiment, the locking element includes a body portion at least partially disposed in the recessed portion when the locking element is connected to the housing, and the locking tab is integrally formed as part of the body portion.

In an embodiment, the connector assembly includes at least one angled inner surface integrally formed as part of the outer locking tab, and the angled inner surface supports a printed circuit board located in the housing.

In an embodiment, the locking element is connected to the housing using at least one selected from the group consisting of welding, brazing, and an adhesive.

In an embodiment, the present invention is a connector assembly, which includes a housing having a cavity, at least one aperture integrally formed as part of the housing, and at least one wire assembly connected to the housing in the cavity. In an embodiment, the at least one wire assembly extends through the at least one aperture. At least one angled guide member is integrally formed as part of the housing. At least one receptacle weld pin is part of the at least one wire assembly.

A weld pin at least partially extends through a portion of the housing and into the cavity. The at least one receptacle weld pin is permanently connected to the weld pin to connect the at least one wire assembly to the housing.

In an embodiment, the present invention is a method of making a connector assembly, which includes the steps of providing a housing having a cavity, providing at least one aperture integrally formed as part of the housing, and providing at least one wire assembly. In an embodiment, the method also includes the steps of providing a locking element, providing at least one receptacle pin being part of the at least one wire assembly, and providing a recessed portion formed as part of the at least one receptacle pin. In an embodiment, the method also includes the steps of placing the locking element into the cavity such that the locking element is connected to the housing in a preassembly position. In an embodiment, the method also includes the steps of moving the receptacle pin through the aperture in into the cavity such that the at least one wire assembly extends through the at least one aperture. In an embodiment, the method also includes the steps of moving the locking element in the cavity such that the locking element is connected to the housing such that the locking element is in a locked position and the locking element is at least partially disposed in the recessed portion, and the locking element connects the at least one wire assembly to the housing, and prevents the at least one wire assembly from becoming detached from the housing.

In an embodiment, the method also includes the steps of providing at least one locking tab integrally formed as part of the locking element and providing at least one outer locking tab integrally formed as part of the housing. In an embodiment, the method also includes the steps of contacting the locking tab with the outer locking tab when the locking element is connected to the housing, preventing the wire assembly from becoming disconnected from the housing.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
Fig. 1 is a perspective view of a temperature sensor assembly having a connector assembly, according to embodiments of the present invention;
Fig. 2 is a sectional view taken along lines 2-2 in Fig. 1;
Fig. 3 is a sectional view taken along lines 3-3 in Fig. 1;
Fig. 4A is an exploded view of a temperature sensor assembly having a connector assembly, according to embodiments of the present invention;
Fig. 4B is an enlarged perspective view of a locking element used as part of a connector assembly according to embodiments of the present invention;
Fig. 5 is a perspective view of a wire assembly positioned adjacent a housing used as part of a temperature sensor assembly having a connector assembly, according to embodiments of the present invention;
Fig. 6 is a perspective view of a temperature sensor assembly having a locking element of a connector assembly in a preassembly position, according to embodiments of the present invention;
Fig. 7A is a section view of a temperature sensor assembly having a locking element of a connector assembly in a preassembly position, according to embodiments of the present invention;
Fig. 7B is an enlarged view of a portion of Fig. 7A;
Fig. 8 is a perspective view of a wire assembly and locking element connected to a housing which is used as part of a temperature sensor assembly having a connector assembly, according to embodiments of the present invention;
Fig. 9 is an enlarged portion of a section view of a temperature sensor assembly having a locking element of a connector assembly in a locked position, according to embodiments of the present invention;
Fig. 10 is a partial sectional view of a wire assembly and locking element connected to a housing which is used as part of a temperature sensor assembly having a connector assembly, according to embodiments of the present invention;
Fig. 11 is a perspective view of a wire assembly inserted into a housing used as part of a temperature sensor assembly having a connector assembly, according to embodiments of the present invention;
Fig. 12 is a partial sectional view of a wire assembly inserted into a housing used as part of a temperature sensor assembly having a connector assembly, according to embodiments of the present invention;
Fig. 13A is an exploded view of an alternate embodiment of a temperature sensor assembly, according to embodiments of the present invention;
Fig. 13B is an enlarged perspective view of a wire assembly used as part of an alternate embodiment of a temperature sensor assembly, according to embodiments of the present invention;
Fig. 14 is a perspective view of an alternate embodiment of a partially assembled temperature sensor assembly, according to embodiments of the present invention; and
Fig. 15 is a perspective view of an alternate embodiment of a partially assembled temperature sensor assembly, according to embodiments of the present invention.

The following description of the preferred embodiment(s) is merely exemplary in nature and is in no way intended to limit the invention, its application, or uses.

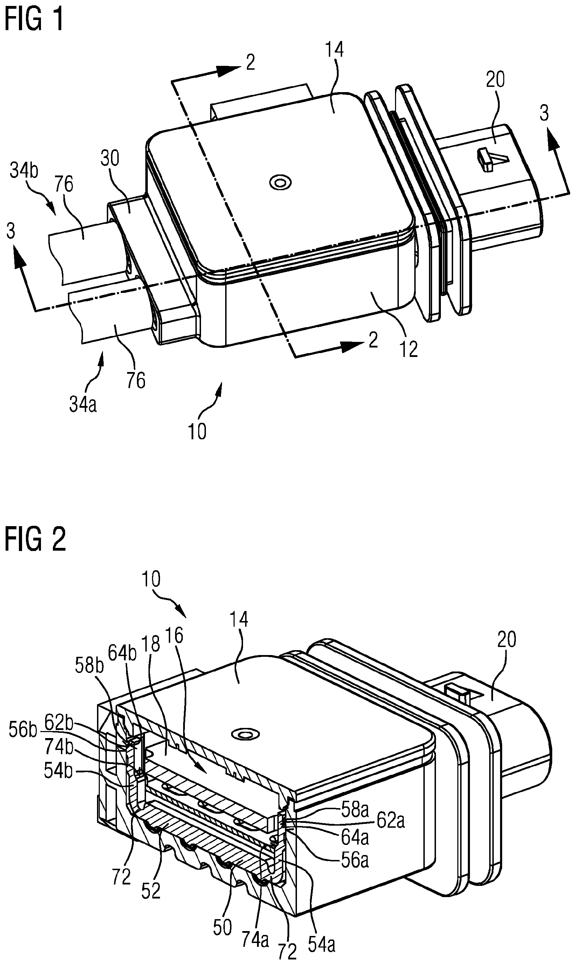

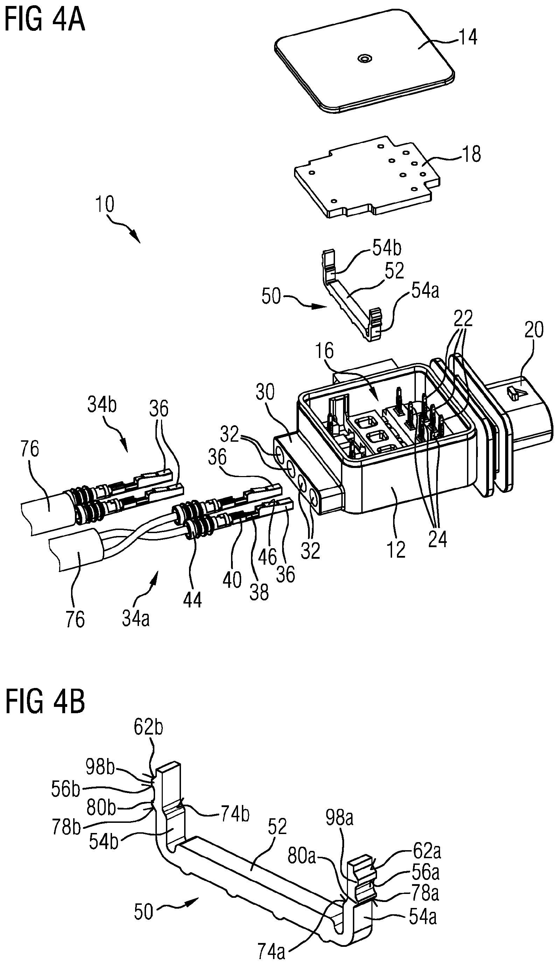

Referring to Figs. 1-4B, an embodiment of a connector assembly used as part of a temperature sensor assembly and having a connection mechanism according to the present invention is shown generally at 10. The temperature sensor assembly 10 includes a housing 12, a cover 14, and a cavity, shown generally at 16, located in the housing 12. Mounted in the cavity 16 is a printed circuit board (PCB) 18, with various circuitry mounted to the PCB 18. The circuitry is in electrical communication with a connector that is surrounded by a shroud 20, where the connector has several pins 22 which extend from the shroud 20, through part of the housing 12, and into the PCB 18. Also extending through the PCB 18 is a plurality of pins 24, each of which are L-shaped. The pins 24 extend through a support portion 26 integrally formed as part of the housing 12. Each of the pins 24 has an outer end 28, which extends out of the support portion 26. Integrally formed as part of the housing 12 is a housing extension 30 having a plurality of apertures 32.

The temperature sensor assembly 10 includes a plurality of wire assemblies 34a,34b, the components of the wire assembly 34a is described, with the other wire assembly 34b having similar construction. The wire assembly 34a has at least one receptacle pin 36, and each receptacle pin 36 has a recessed portion 38. Each receptacle pin 36 also has a corresponding crimping portion 40, which is used to clamp the receptacle pin 36 to a corresponding wire 42 and a portion of a corresponding single wire sealing element 44, such that each wire 42, receptacle pin 36, and single wire sealing element 44 are held together by the crimping portion 40.

The receptacle pin 36 also includes an angled portion 46 used for securing the receptacle pin 36 in the housing 12. When assembled, the angled portion 46 is engaged with a locking element 48 integrally formed as part of the housing 12.

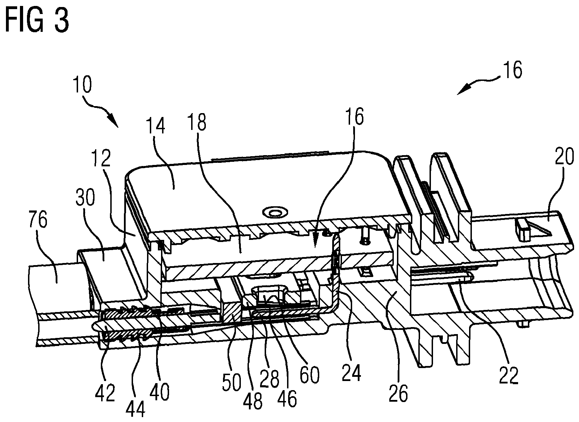

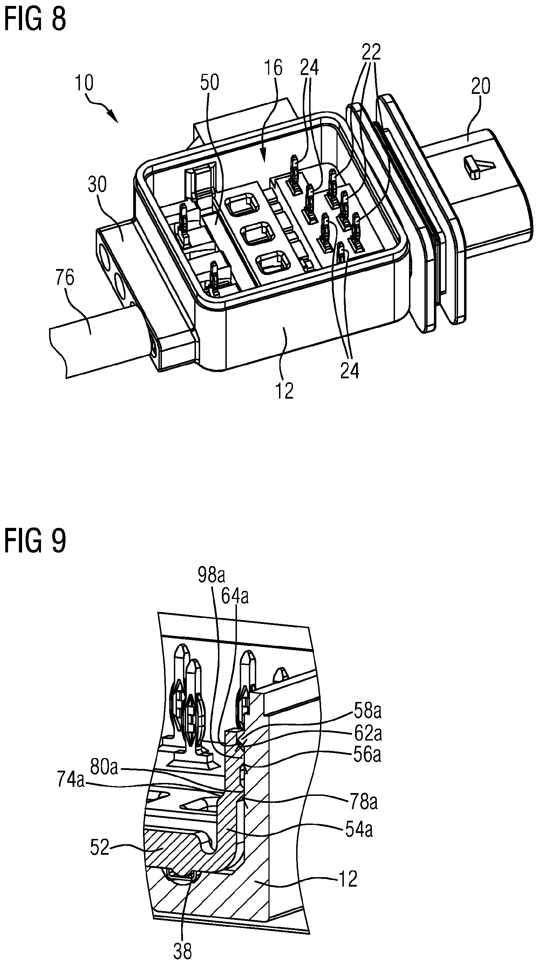

The connector assembly also includes another locking element 50, which is a separate component from the housing 12. When assembled, at least a portion of the locking element 50 extends into the recessed portion 38 of the receptacle pin 36, as shown in Figs. 3 and 8-10. More specifically, the locking element 50 includes a body portion 52, and two locking tabs 54a,54b.

The first locking tab 54a includes an angled guide surface 56a which is part of a first locking rib 98a, and the second locking tab 54b also includes an angled guide surface 56b which is part of a second locking rib 98b. The locking element 50 also includes a prepositioning angled guide surface 78a which is part of a prepositioning rib 80a, which are also part of the first locking tab 54a, and another prepositioning angled guide surface 78b which is part of a second prepositioning rib 80b, which are also part of the second locking tab 54b.

Also integrally formed as part of the housing 12 and located in the cavity 16 is a first outer locking tab 58a and a second outer locking tab 58b. The locking tabs 54a,54b of the locking element 50 and the outer locking tabs 58a,58b are used for securing the locking element 50 in place in the cavity 16 of the housing 12.

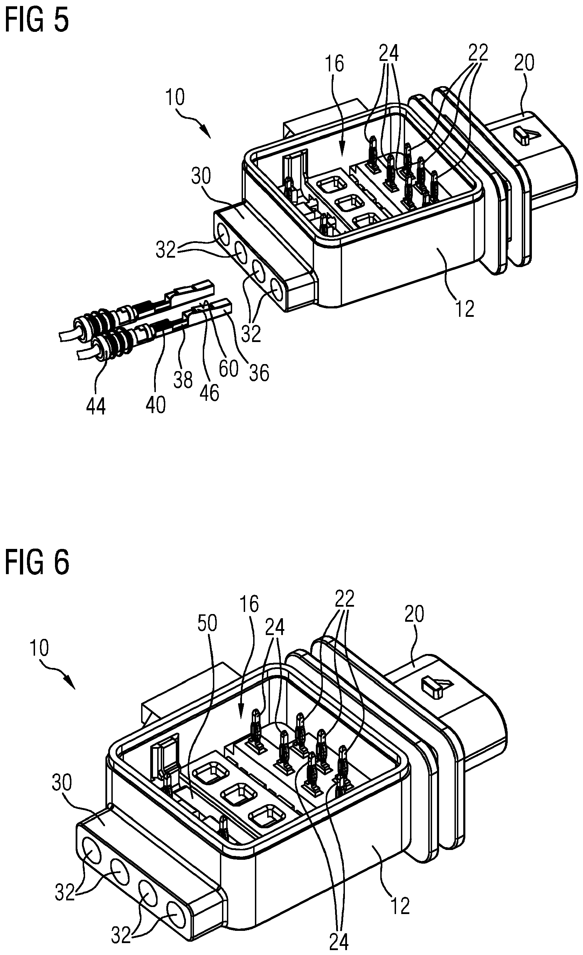

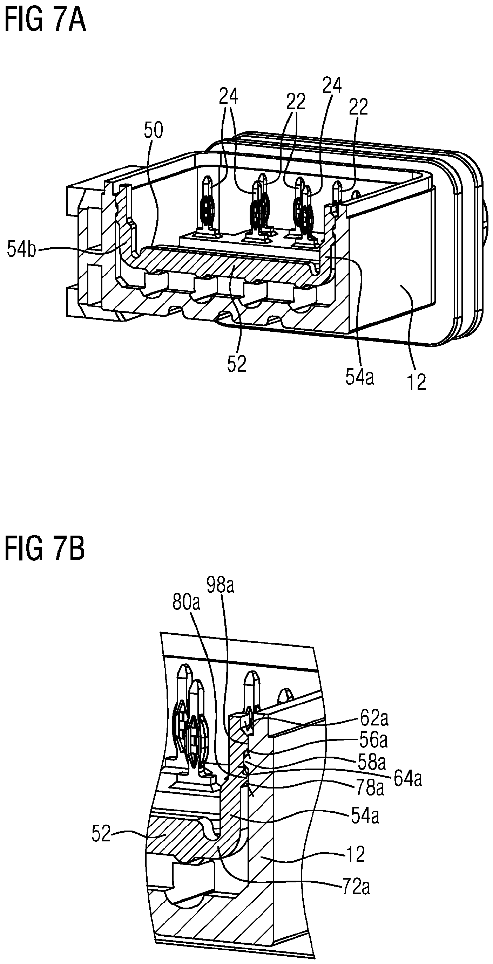

The assembly of one of the receptable pins 36 of the first wire assembly 34a is described in Figs. 5-10, but the remaining receptacle pins are assembled in a similar manner. During assembly, the locking element 50 is placed in a preassembly position prior to the receptacle pin 36 being inserted into the cavity 16. More specifically, the locking element 50 is placed in the cavity 16, such that the first locking tab 54a contacts the first outer locking tab 58a and deflects, and the second locking tab 54b contacts the second outer locking tab 58b and deflects. The prepositioning angled guide surface 78a of the first locking tab 54a slides along the first outer locking tab 58a causing the first locking tab 54a to deflect, and a prepositioning angled guide surface 78b of the second locking tab 54b slides along the second outer locking tab 58b, causing the second locking tab 54b to deflect.

As the locking element 50 is further inserted into the cavity 16, the prepositioning angled guide surface 78a moves past the first outer locking tab 58a such that the prepositioning angled guide surface 78a is no longer in contact with the first outer locking tab 58a, and the prepositioning angled guide surface 78b moves past the second outer locking tab 58b such that the prepositioning angled guide surface 78b is no longer in contact with the second outer locking tab 58b. This relieves some of the deflection in the locking tabs 54a,54b. Also, the first locking tab 54a is positioned such that the first outer locking tab 58a is in contact with the first locking tab 54a in an area between the prepositioning rib 80a and the first locking rib 98a, and the second locking tab 54b is positioned such that the second outer locking tab 58b is in contact with the second locking tab 54b in an area between the prepositioning rib 80b and the second locking rib 98b, as shown in Figs. 6-7B. The locking element 50 is then in the preassembly position.

The locking element 50 is placed in the preassembly position such that the housing 12 having the pins 22,24 and locking element 50 is a preassembled connector assembly that may be used with various combinations of printed circuit boards and wire assemblies for different applications.

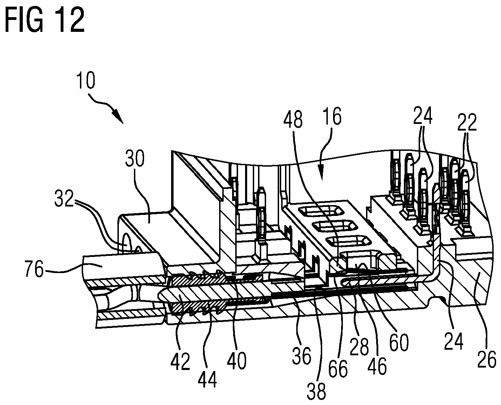

Once the locking element 50 is in the preassembly position, the receptacle pin 36 is inserted through one of the apertures 32 of the housing extension 30. As the receptacle pin 36 is moved through the aperture 32 and into the cavity 16, the angled portion 46 contacts the locking element 48. More specifically, an angled guide surface 60 of the angled portion 46 slides along the locking element 48, causing the angled portion 46 to deflect. As the receptacle pin 36 is further inserted into the cavity 16, the angled portion 46 moves past the locking element 48, such that the angled guide surface 60 is no longer in contact with the locking element 48, and the deflection of the angled portion 46 is eliminated. Once the angled portion 46 has moved past the locking element 48, a locking surface 66 of the angled portion 46 is in contact with the locking element 48. Additionally, the outer end 28 of the pin 24 is located in part of the receptacle pin 36, as shown in Figs. 3, 10, and 12.

Once the receptacle pin 36 is assembled in the housing 12, as shown in Figs. 3 and 8-10, the locking element 50 is moved to an assembled position in the cavity 16 to secure the receptable pin 36 in place. The locking element 50 is moved towards the receptable pin 36, such that the angled guide surface 56a of the first locking rib 98a slides along the first outer locking tab 58a, causing the first locking tab 54a to deflect, and the angled guide surface 56b of the second locking rib 98b slides along the second outer locking tab 58b, causing the second locking tab 54b to deflect. As the locking element 50 continues to move towards the receptacle pin 36, the base portion 52 moves into the recessed portion 38.

As the locking element 50 is further inserted into the cavity 16, the angled guide surface 56a moves past the first outer locking tab 58a such that the angled guide surface 56a is no longer in contact with the first outer locking tab 58a, and the angled guide surface 56b moves past the second outer locking tab 58b such that the angled guide surface 56b is no longer in contact with the second outer locking tab 58b. This relieves some of the deflection in the locking tabs 54a,54b. Also, the first locking tab 54a is positioned such that a locking surface 62a of the first locking rib 98a contacts a locking surface 64a of the first outer locking tab 58a, and the second locking tab 54b is positioned such that a locking surface 62b of the second locking rib 98b contacts a locking surface 64b of the second outer locking tab 58b. Once assembled in the housing 12, part of the body portion 52 of the locking element 50 is located in the recessed portion 38 securing the receptacle pin 36 in a locked position. Additionally, the body portion 52 of the locking element 50 is also partially disposed in the recessed portion of the other receptable pins, securing each receptacle pin in a locked position.

The locking tabs 54a,54b engaged with the outer locking tabs 58a,58b provide an interference fit, or "snap fit" connection. However, it is within the scope of the invention that other types of connections may be used, such as, but not limited to, brazing, ultrasonic welding, or an adhesive.

The locking element 50 also includes a first narrow portion 72a and a second narrow portion 72b, which facilitate the deflection of the locking tabs 54a,54b during assembly.

After the locking element 50 is assembled in the housing 12, the PCB 18 is then assembled into the cavity 16 such that part of the pins 22,24 extend through the PCB 18, as shown in Fig. 3. Also formed as part of the locking tabs 54a,54b is a first angled inner surface 74a, and a second angled inner surface 74b. The angled inner surfaces 74a,74b provide support for the PCB 18 once the PCB 18 is installed in the housing 12.

Once the PCB 18 has been assembled in the housing 12, the cover 14 is then attached to the housing 12 using any suitable method, such as a snap-fit connection, an ultrasonic weld, brazing, or an adhesive.

Once the locking element 50 is attached to the housing 12, the locking element 50 is prevented from becoming detached from the housing 12 by the snap-fit connection. The wire assembly 34a includes a sleeve member 76, and the wire 42 is surrounded by the sleeve member 76. If a force, such as a pulling force, is applied to the wire assembly 34a, more specifically the sleeve member 76 of the wire assembly 34a, in a direction away from the housing 12, the locking element 50 prevents the wire assembly 34a from becoming detached from the housing 12. The other wire assembly 34b has similar connections. In one example, the pulling force on the sleeve member 76 may be the result of a person gripping and pulling on the sleeve member 76. Also, once the cover 14 is attached to the housing 12, the connection between the cover 14 and the housing 12 prevents the locking element 50 from becoming completely detached from the housing 12, even if the connection between the locking element 50 and the housing 12 fails.

Once the locking element 50 is attached to the housing 12, because the second connection is permanent, none of the wire assemblies 34a,34b may be removed without catastrophically damaging the locking element 50, the housing extension 30, or the wire assemblies 34a,34b. Any damage to the locking element 50, the housing extension 30, or the wire assemblies 34a,34b, provides an indication that the temperature sensor assembly 10 has been tampered with.

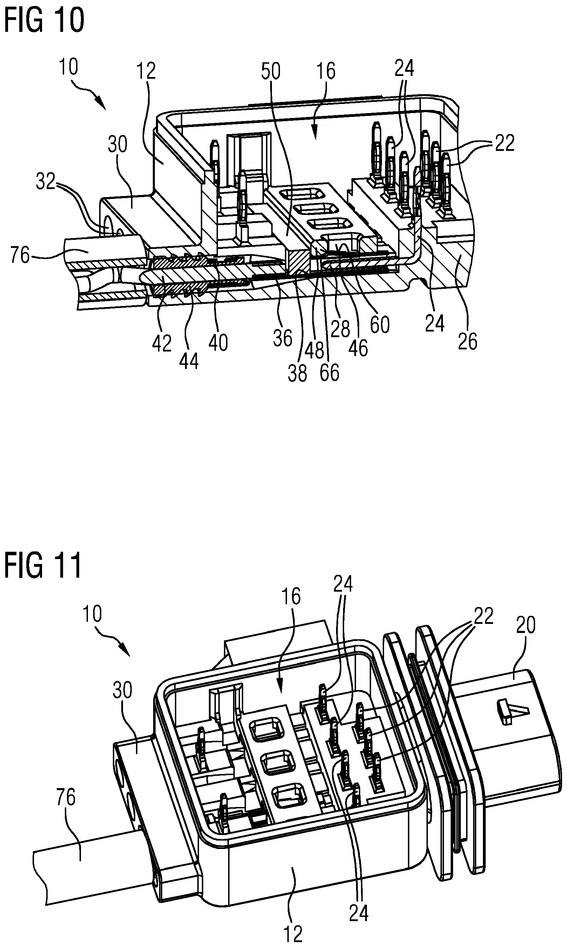

In an alternate embodiment, shown in Figs. 11-12, the receptacle pin 36 is assembled in the housing 12, as described above, and the locking surface 66 of the angled portion 46 is in contact with the locking element 48, the locking element 50 is then assembled in the housing 12. This eliminates the use of the preassembly position of the locking element 50.

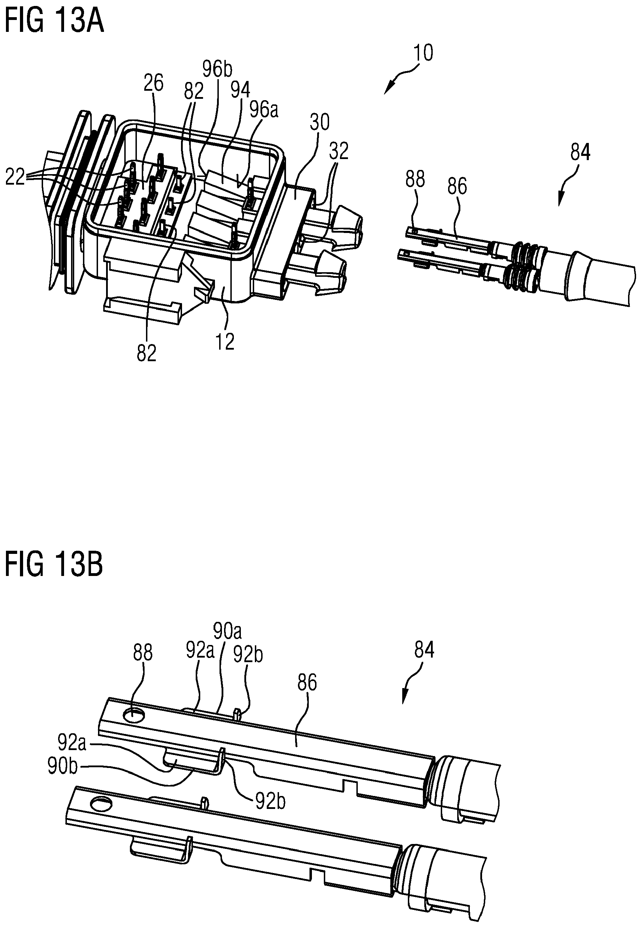

Another alternate embodiment of the sensor assembly 10 is shown in Figs. 13A-15, with like numbers referring to like elements. In this embodiment, the locking element 50 is not used, and another type of connector assembly is used. Instead of the pins 24, there are weld pins 82, which are generally J-shaped. A portion of each of the pins 82 extend through the support portion 26 integrally formed as part of the housing 12. This embodiment also includes a wire assembly, shown generally at 84, and although the components of the wire assembly 84 are described, other wire assemblies used in this embodiment have similar construction.

In this embodiment, the receptacle pin 36 is not used, but rather the wire assembly 84 includes receptacle weld pins 86. Each of the receptacle weld pins 86 includes a weld aperture 88, and integrally formed with the receptacle weld pins 86 are two guide flanges 90a,90b, which in this embodiment are generally L-shaped. Each guide flange 90a,90b includes a guide portion 92a and a locking flange 92b.

Integrally formed as part of the housing 12 is a plurality of angled guide members 94. Each of the angled guide members 94 includes an angled guide surface 96a and a locking surface 96b.

In a similar manner to the previous embodiment, the wire assembly 84 in this embodiment also includes a corresponding crimping portion 40, which is used to clamp the receptacle weld pin 86 to a corresponding wire 42 and a portion of a corresponding single wire sealing element 44, such that each wire 42, receptacle weld pin 86, and single wire sealing element 44 are held together by the crimping portion 40.

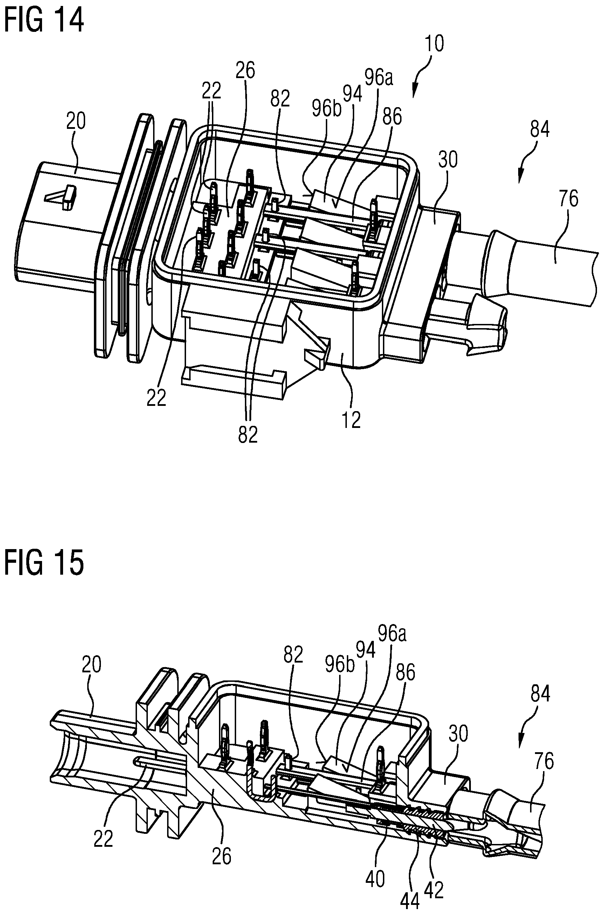

During assembly, the wire assembly 84 is positioned such that the receptacle weld pin 86 is inserted into one of the corresponding apertures 32 formed as part of the housing extension 30. Once the receptacle weld pin 86 is through the aperture 32, the receptacle weld pin 86 is moved towards the a corresponding weld pin 82, such that the guide portion 92a of each guide flange 90a,90b contacts the angled guide surface 96a of a corresponding angled guide member 94. As the receptacle weld pin 86 is moved further towards the corresponding weld pin 82, the such that the guide portion 92a of each guide flange 90a,90b moves along one of the angled guide surfaces 96a, the receptacle weld pin 86 deflects. Once the receptacle weld pin 86 has moved far enough into the housing 12 towards the weld pin 82, such that the guide portion 92a of each guide flange 90a,90b has moved past the angled guide surfaces 96a, the deflection in the receptacle weld pin 86 is relieved, and the receptacle weld pin 86 moved to a position such that the weld pin 82 is inserted into the weld aperture 88, as shown in Figs. 14-15, and the locking flanges 92b of each guide flange 90a,90b are in contact with a corresponding one of the locking surfaces 96b of the angled guide members 94.

Once the weld pin 82 is inserted into the weld aperture 88, the weld pin 82 and receptacle weld pin 86 are welded together, securing the connection between the weld pin 82 and the receptacle weld pin 86. Although welding is the process used to connect the weld pin 82 and the receptacle weld pin 86, it is within the scope of the invention that other types of connections made be used, such as brazing or an adhesive.

Once the weld pin 82 and the receptacle weld pin 86 are welded together, the connection between the weld pin 82 and the receptacle weld pin 86 and the contact between the locking flanges 92b and the locking surfaces 96b provide resistance to a pulling force on the wire assembly 84.

If a force, such as a pulling force, is applied to the wire assembly 84, in a direction away from the housing 12, connection between the weld pin 82 and the receptacle weld pin 86 and the contact between the locking flanges 92b and the locking surfaces 96b prevent the wire assembly 84 from becoming detached from the housing 12.

Once the weld pin 82 is connected to the receptacle weld pin 86 and the locking flanges 92b are in contact with the locking surfaces 96b, because the connection between the weld pin 82 and the receptacle weld pin 86 is permanent, the wire assembly 84 may not be removed without catastrophically damaging the weld pin 82, the receptacle weld pin 86, the angled guide members 94, or the wire assembly 84. Any damage to the weld pin 82, the receptacle weld pin 86, the angled guide members 94, or the wire assembly 84, provides an indication that the temperature sensor assembly 10 has been tampered with.

The present invention is not limited for use with the temperature sensor assembly 10 described above. The embodiments of the connector assembly of the present invention may be used for other types of sensor or circuit assemblies as well. In one embodiment, the connector assembly of the present invention includes a single locking element which prevents the detachment of multiple wire assemblies 34a,34b from the housing 12, such that attempting to disconnect the wire assemblies 34a,34b results in catastrophic damage to the temperature sensor assembly 10. In another embodiment, the connector assembly includes weld connections between weld pins and receptacle weld pins to prevent the detachment of the receptacle weld pins from the housing 12, where any attempt to disconnect the wire assembly 84 from the housing 12 result in catastrophic damage to the temperature sensor assembly 10.

The description of the invention is merely exemplary in nature and, thus, variations that do not depart from the gist of the invention are intended to be within the scope of the invention. Such variations are not to be regarded as a departure from the spirit and scope of the invention.

## Claims

1. A connector assembly, comprising:
- a housing (12) having a cavity (16);
- at least one aperture (32) integrally formed as part of the housing (12);
- at least one wire assembly (34a,34b) connected to the housing (12) in the cavity (16), the at least one wire assembly (34a,34b) also extending through the at least one aperture (32);
- a locking element (50) connected to the housing (12) such that the locking element (50) is located in the cavity (16);
- wherein the locking element (50) prevents the at least one wire assembly (34a,34b) from becoming detached from the housing (12).

2. The connector assembly of the preceding claim, the at least one wire assembly (34a,34b) further comprising:
- at least one receptacle pin (36);
- a recessed portion (38) formed as part of the at least one receptacle pin (36);
- wherein the locking element (50) is at least partially disposed in the recessed portion (38) when the locking element (50) is connected to the housing (12).

3. The connector assembly of one of the preceding claims, wherein the locking element (50) is permanently connected to the housing (12).

4. The connector assembly of one of the preceding claims, further comprising:
- at least one locking tab (54a,54b) integrally formed as part of the at least one locking element (50);
- at least one outer locking tab (58a,58b) integrally formed as part of the housing (12);
- wherein the at least one locking tab (54a,54b) is in contact with the at least one outer locking tab (58a,58b) when the locking element (50) is connected to the housing (12), preventing the at least one wire assembly (34a,34b) from becoming disconnected from the housing (12).

5. The connector assembly of claim 4, the at least one locking element further comprising:
- a body portion (52) at least partially disposed in the recessed portion (38) when the locking element (50) is connected to the housing (12);
- wherein the at least one locking tab (54a,54b) integrally formed as part of the body portion (52).

6. The connector assembly of one of claim 4, further comprising:
- at least one angled inner surface (74a,74b) integrally formed as part of the at least one locking tab (54a,54b);
- wherein the at least one angled inner surface (74a,74b) supports a printed circuit board (18) located in the housing (12).

7. The connector assembly of one of the preceding claims, wherein the locking element (50) is connected to the housing (12) using at least one selected from the group consisting of welding, brazing, and an adhesive.

8. A connector assembly, comprising:
- a housing (12) having a cavity (16);
- at least one aperture (32) integrally formed as part of the housing (12);
- at least one wire assembly (84) connected to the housing (12) in the cavity (16), the at least one wire assembly (84) also extending through the at least one aperture (32);
- at least one angled guide member (94) integrally formed as part of the housing (12);
- at least one receptacle weld pin (86) being part of the at least one wire assembly (84);
- a weld pin (82) at least partially extending through a portion of the housing (12) and into the cavity (16);
- wherein the at least one receptacle weld pin (86) is permanently connected to the weld pin (82) to connect the at least one wire assembly (84) to the housing (12).

9. A method of making a connector assembly, comprising the steps of:
- providing a housing (12) having a cavity (16);
- providing at least one aperture (32) integrally formed as part of the housing (12);
- providing at least one wire assembly (34a,34b);
- providing a locking element (50);
- providing at least one receptacle pin (36) being part of the at least one wire assembly (34a,34b); and
- providing a recessed portion (38) formed as part of the at least one receptacle pin (36);
- placing the locking element (50) into the cavity (16) such that the locking element (50) is connected to the housing (12) in a preassembly position;
- moving the at least one receptacle pin (36) through the at least one aperture (32) in into the cavity (16) such that the at least one wire assembly (34a,34b) extends through the at least one aperture (32);
- moving the locking element (50) in the cavity (16) such that the locking element (50) is connected to the housing (12) such that the locking element (50) is in a locked position and the locking element (50) is at least partially disposed in the recessed portion (38), and the locking element (50) connects the at least one wire assembly (34a,34b) to the housing (12), and prevents the at least one wire assembly (34a,34b) from becoming detached from the housing (12).

10. The method of making a connector assembly of claim 9, comprising the steps of:
- providing at least one locking tab (54a,54b) integrally formed as part of the locking element (50); and
- providing at least one outer locking tab (58a,58b) integrally formed as part of the housing (12);
- contacting the at least one locking tab (54a,54b) with the at least one outer locking tab (58a,58b) when the locking element (50) is connected to the housing (12), preventing the at least one wire assembly (34a,34b) from becoming disconnected from the housing (12).
